(19) Europäisches Patentamt / European Patent Office / Office européen des brevets

(11) **EP 4 769 299 A1**

(12) **EUROPEAN PATENT APPLICATION**
published in accordance with Art. 153(4) EPC

(43) Date of publication:
**01.07.2026 Bulletin 2026/27**

(21) Application number: **24899402.2**

(22) Date of filing: **18.09.2024**

(51) International Patent Classification (IPC):
*G06T 7/00* $^{(2017.01)}$

(86) International application number:
**PCT/CN2024/119274**

(87) International publication number:
**WO 2025/118756 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.12.2023 CN 202311692164**

(71) Applicant: **Tencent Technology (Shenzhen) Company Limited**
**Shenzhen, Guangdong 518057 (CN)**

(72) Inventor: **GAO, Binbin**
**Shenzhen, Guangdong 518057 (CN)**

(74) Representative: **EP&C**
**P.O. Box 3241**
**2280 GE Rijswijk (NL)**

(54) **METHOD AND APPARATUS FOR PROCESSING IMAGE, DEVICE, STORAGE MEDIUM, AND COMPUTER PROGRAM PRODUCT**

(57) The present application relates to the technical field of artificial intelligence, and discloses a method and apparatus for processing an image, a device, a storage medium, and a computer program product. The method comprises: performing feature extraction on an image to obtain an extracted image feature; encoding and decoding the extracted image feature to obtain a reconstructed image feature; inputting a difference value between the reconstructed image feature and the extracted image feature into a discriminator to obtain first recognition information outputted by the discriminator, the first recognition information comprising first information elements, and the first information elements being used for indicating the probability that a corresponding pixel is anomalous; and on the basis of the extracted image feature, the reconstructed image feature, and the first recognition information, determining an anomaly recognition result of the image. According to the described solution, anomaly conditions of the pixels in an image are comprehensively determined by combining image features before and after reconstruction along with a discrimination result determined on the basis of the difference between the image features before and after reconstruction, so that pixel-level image anomaly detection can be achieved.

Extract a first feature map from the image — 210

Encode the first feature map and then decode the encoded first feature map to obtain a reconstructed feature map — 220

Input a difference between the first feature map and the reconstructed feature map into a discriminator to obtain a first result comprising a respective first value for each pixel of the image, where the respective first value for each pixel is a first measurement of a probability of such pixel belonging to an anomaly contained in the image — 230

Determine an anomaly-recognition result of the image according to the first feature map, the reconstructed feature map, and the first result — 240

**FIG. 2**

**Description**

This application claims priority to Chinese Patent Application No. 2023116921640, filed with the China National Intellectual Property Administration on December 8, 2023, and entitled "METHOD AND APPARATUS FOR PROCESSING IMAGE, DEVICE, STORAGE MEDIUM, AND COMPUTER PROGRAM PRODUCT".

FIELD OF THE TECHNOLOGY

The present disclosure relates to the field of artificial intelligence technology, and in particular to image processing techniques.

BACKGROUND OF THE DISCLOSURE

Image anomaly detection refers to techniques of detecting whether an image contains an anomaly or a defect at a pixel level. Image anomaly detection may be implemented by using artificial intelligence.

In related art, a machine learning model may be trained through unsupervised learning using normal images, and the trained machine learning model can generate a large reconstruction error on images containing the anomaly. Thereby, anomaly detection is achieved.

The above machine learning model trained by unsupervised learning has low accuracy in image anomaly detection.

SUMMARY

Embodiments of the present disclosure provide a method and an apparatus for processing an image and apparatus, a device, a storage medium, and a computer program product. Anomalies can be detected from images with higher accuracy. The technical solutions are as follows.

According to an aspect, a method for processing an image is provided according to embodiments of the present disclosure. The method is executable by a computer device and comprises: extracting a first feature map from the image; encoding the first feature map and then decoding the encoded first feature map to obtain a reconstructed feature map; inputting a difference between the first feature map and the reconstructed feature map into a discriminator to obtain a first result comprising a respective first value for each pixel of the image, where the respective first value for each pixel is a first measurement of a probability of said pixel belonging to an anomaly contained in the image, and the discriminator is a machine learning model trained using a first sample image containing the anomaly, and the first sample image containing the anomaly is obtained through image composition on a basis of a second sample image not containing the anomaly; and determining an anomaly-recognition result of the image according to the first feature map, the reconstructed feature map, and the first result.

According to another aspect, a method for processing an image is provided according to embodiments of the present disclosure. The method comprises: obtaining a first sample image, a first mask and a second sample image, where the first mask indicates that no pixel in a first sample image belongs to an anomaly, the second sample image is an image containing the anomaly and is obtained through applying a second mask to the first sample image, and the second mask indicates locations of pixels, that are to be converted into the anomaly, in the first sample image; inputting the first sample image into a feature extractor in a model for detecting the anomaly to obtain a first sample feature map; inputting the first sample feature map into a codec module in the model to obtain a first reconstructed sample feature map; inputting a difference between the first reconstructed sample feature map and the first sample feature map into a discriminator in the module to obtain a first sample result; inputting the second sample image into the feature extractor to obtain a second sample feature map; inputting the second sample feature map into the codec the codec module to obtain a second reconstructed sample feature map; inputting a difference between the second reconstructed sample feature map and the second sample feature map into the discriminator to obtain a second sample result; calculating a loss according to the first sample feature map, the first reconstructed sample feature map, the first sample result, the second sample feature map, the second reconstructed sample feature map, and the second sample result; and updating a parameter of the model using the loss; where the model with the updated parameters is configured for implementing the method described in the foregoing aspect.

According to another aspect, an apparatus for processing an image is provided according to embodiments of the present disclosure. The apparatus comprises: an extracting module, configured for extracting a first feature map from the image; a encoding-decoding module, configured for encoding the first feature map and then decoding the encoded first feature map to obtain a reconstructed feature map; a reconstructing module, configured for inputting a difference between the first feature map and the reconstructed feature map into a discriminator to obtain a first result comprising a respective first value for each pixel of the image, where the respective first value for each pixel is a first measurement of a probability of said pixel belonging to an anomaly contained in the image, and the discriminator is a machine learning model trained using a sample image containing the anomaly, and the first sample image containing the anomaly is obtained through image composition on a basis of a second sample image not containing the anomaly; and a recognizing module, configured for determining an anomaly-recognition result of the image according to the first feature map, the reconstructed feature map, and the first result.

According to another aspect, an apparatus for processing an image is provided according to embodiments of the present disclosure. The apparatus comprises: a sample processing module, configured for obtaining a first sample image, a first mask, and a second sample image, where the first mask indicates that no pixel in a first sample image belongs to an anomaly, the second sample image is an image containing the anomaly and is obtained through applying a second mask to the first sample image, and the second mask indicates locations of pixels, that are to be converted into the anomaly, in the first sample image; a model processing module, configured for: inputting the first sample image into a feature extractor in a model for detecting the anomaly to obtain a first sample feature map; inputting the first sample feature map into a codec module in the model to obtain a first reconstructed sample feature map; inputting a difference between the first reconstructed sample feature map and the first sample feature map into a discriminator in the module to obtain a first sample result; inputting the second sample image into the feature extractor to obtain a second sample feature map; inputting the second sample feature map into the codec the codec module to obtain a second reconstructed sample feature map; inputting a difference between the second reconstructed sample feature map and the second sample feature map into the discriminator to obtain a second sample result; a loss calculating module, configured for calculating a loss according to the first sample feature map, the first reconstructed sample feature map, the first sample result, the second sample feature map, the second reconstructed sample feature map, and the second sample result; and a parameter updating module, configured for updating a parameter of the model using the loss; wherein the model with the updated parameters is configured for implementing the method as described in the first aspect.

According to another aspect, a computer device is provided according to embodiments of the present disclosure. The computer device comprises a processor and a memory, the memory stores at least one instruction, at least one program, a code set, or an instruction set. The at least one instruction, the at least one program, the code set, or the instruction set when loaded and executed by the processor implements the method according to any foregoing aspect.

According to another aspect, a computer-readable storage medium is provided according to embodiments of the present disclosure. The storage medium stores at least one instruction, at least one program, a code set, or an instruction set. The at least one instruction, the at least one program, the code set, or the instruction set when loaded and executed by a processor implements the method according to any foregoing aspect.

According to another aspect, a computer program product or a computer program is provided according to embodiments of the present disclosure. The computer program product or the computer program includes computer instructions, and the computer instructions are stored in a computer-readable storage medium. A processor of a computer device reads the computer instructions from the computer-readable storage medium, and the processor executes the computer instructions, so that the computer device performs the method according to any foregoing aspect.

The technical solution provided in the embodiments of the present disclosure has at least the following technical advantages.

Herein after the first feature map is extracted from the image, it is reconstructed as the reconstructed feature map feature through encoding and decoding. Afterwards, the discriminator performs anomaly detection on a basis of the difference between the reconstructed feature map and the first feature map, such that the first result indicating the respective probability of each pixel belonging to the contained anomaly is obtained. Then, the feature maps before and after the reconstruction, as well as the first result serve as a basis of obtaining the anomaly-recognition result. That is, during determination of whether the pixels in the image belong to the contained anomaly, not only the feature maps before and after the reconstruction are directly used for the determination, but also the difference between the feature maps before and after the reconstruction is fed into the discriminator to provide further reference. In this way, whether the pixels in the image belong to the contained anomaly are comprehensively determined with reference to the feature maps before and after the reconstruction and the result output by the discriminator, and image anomaly detection can be implemented at a pixel level with improved accuracy. In addition, the first sample image, which is configured for training the discriminator, is obtained through image composition based on the second sample image. Therefore, it is not necessary to collect and label images manually in a training process of the discriminator, and the training can be implemented as unsupervised learning. A large quantity of samples can thus be prepared for training the discriminator, which improves an effect of the training and reduces a difference in effect with respect to training the discriminator using real anomaly images. Accuracy of the discriminator is ensured, and hence accuracy of the pixel-level anomaly detection performed on the image through the discriminator is also ensured.

BRIEF DESCRIPTION OF THE DRAWINGS

To describe the technical solutions of embodiments of the present disclosure more clearly, the following briefly introduces the accompanying drawings needed for describing the embodiments. Apparently, the accompanying drawings in the following descriptions show only some embodiments of the present disclosure, and a person of ordinary skill in the art may still derive other drawings from these accompanying drawings without creative efforts.

FIG. 1 is a schematic diagram of a system for processing an image according to an embodiment of the present disclosure.

FIG. 2 is a schematic flowchart of a method for processing an image according to an embodiment of the present disclosure.

FIG. 3 is a schematic flowchart of a method for processing an image according to another embodiment of the present disclosure.

FIG. 4 is a schematic flowchart of a method for processing an image according to another embodiment of the present disclosure.

FIG. 5 is a schematic flowchart of a method for processing an image according to another embodiment of the present disclosure.

FIG. 6 is a schematic diagram of architecture of an unsupervised discriminative reconstruction network according to an embodiment of the present disclosure.

FIG. 7 is a graph of comparison between test results according to an embodiment of the present disclosure.

FIG. 8 is a graph showing comparison between results of anomaly recognition according to an embodiment of the present disclosure.

FIG. 9 is a block diagram of a structure of an apparatus for processing an image according to an embodiment of the present disclosure.

FIG. 10 is a block diagram of a structure of an apparatus for processing an image according to another embodiment of the present disclosure.

FIG. 11 is a schematic diagram of a structure of a server according to an embodiment of the present disclosure.

DESCRIPTION OF EMBODIMENTS

Exemplary embodiments are described in detail herein, and examples thereof are shown in the accompanying drawings. When the following descriptions are made with reference to the accompanying drawings, unless otherwise indicated, the same numbers in different accompanying drawings represent the same or similar elements. The implementations described in the following exemplary embodiments do not represent all implementations consistent with the present disclosure. On the contrary, the implementations are merely examples of an apparatus and a method that are consistent with some aspects of the present disclosure described in detail in claims.

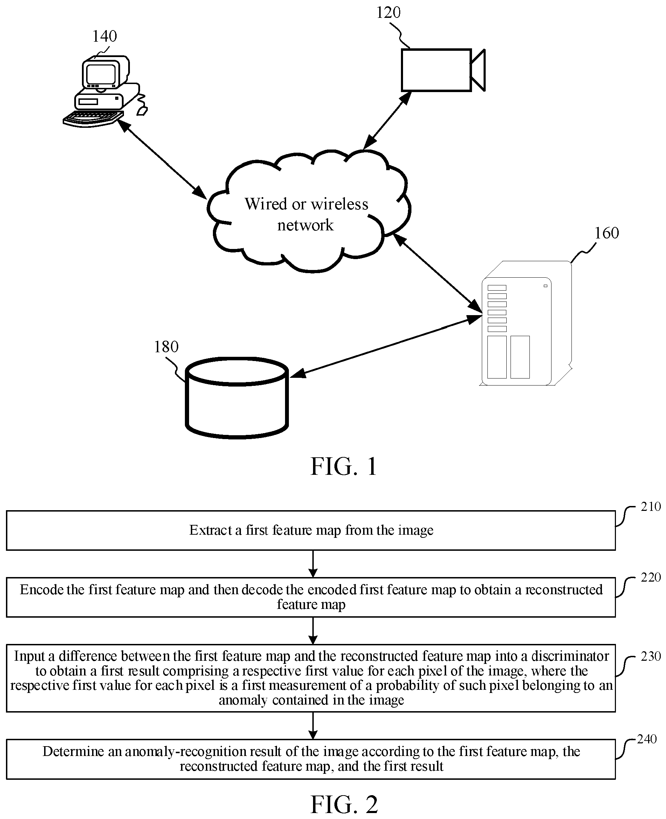

FIG. 1 is a schematic diagram of a system for processing images according to an embodiment of the present disclosure. As shown in FIG. 1, the system includes an image acquisition device 120, a terminal 140, and a server 160. In embodiments of the present disclosure including the embodiments of both the claims and the specification (hereinafter referred to as "all embodiments of the present disclosure"), the system may further include a database 180.

The image acquisition device 120 is a device configured to acquire an image. The image acquisition device 120 may have a built-in or external camera component.

The image acquisition device 120 may include an image output interface, for example, a universal serial bus (USB) interface, a high-definition multimedia interface (HDMI) interface, or an Ethernet interface. Alternatively, the image output interface may be a wireless interface, for example, a wireless local area network (WLAN) interface or a Bluetooth interface.

Accordingly, based on different types of the image output interface, the image may be exported in various manners. For example, the image may be exported to the terminal 140 in a wired or a short-distance wireless manner, or the image may be exported to the terminal 140 or the server 160 via a local area network or the Internet.

The terminal 140 may be a terminal device having a processing capacity and a function of displaying an interface. For example, the terminal 140 may be a mobile phone, a tablet computer, an e-book reader, smart glasses, a laptop portable computer, a desktop computer, or the like.

The terminal 140 may be a terminal used by a user or may be a terminal used by a developer.

When the terminal 140 is a terminal used by a developer, the developer may develop, through the terminal 140, a machine learning model configured for image processing and deploy the machine learning model to the server 160 or the terminal used by the user.

When the terminal 140 is a terminal used by a user, an application that obtains an image, performs anomaly recognition on the image, and presents a recognition result may be installed in the terminal 140. The application may have a built-in machine learning model or may invoke the foregoing machine learning model configured for image processing. After obtaining the image acquired by the image acquisition device 120, the terminal 140 may invoke the application to perform anomaly recognition on the image and thereby obtain an anomaly-recognition result, and it may present the anomaly-recognition result to the user for review.

As shown in FIG. 1, the terminal 140 and the image acquisition device 120 may be concrete devices that are physically separated. In all embodiments of the present disclosure, when the terminal 140 is a terminal used by a user, the terminal 140 and the image acquisition device 120 may be alternatively integrated into a single physical device. For example, the terminal 140 may be a smartphone with a built-in camera.

The server 160 may be an independent physical server, or may be a server cluster or a distributed system that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The server 160 may be a server that provides a background service for the application installed in the terminal 140. The background server may be configured to manage versions of the application, perform background processing on the image obtained by the application, and return a processing result, perform background training on the machine learning model developed by the developer, or the like.

The database 180 may be a Redis database or may be a database of another type. The database 180 is configured to store data of various types.

In all embodiments of the present disclosure, the terminal 140 may be connected to the server 160 via a communication network. In all embodiments of the present disclosure, the image acquisition device 120 may also be connected to the server 160 via a communication network. In all embodiments of the present disclosure, the communication network may be a wired network or wireless network.

In all embodiments of the present disclosure, the system may further include a management device (not depicted in FIG 1). The management device is connected to the server 160 via a communication network. In all embodiments of the present disclosure, the communication network may be a wired network or wireless network.

FIG. 2 is a schematic flowchart of a method for processing an image according to an embodiment of the present disclosure. The method may be executed by a computer device. For example, the computer device may be a server, or the computer device may be a terminal, or the computer device may include a server and a terminal. The server may be the server 160 in the embodiment as shown in FIG. 1, and the terminal may be the terminal 140 used by the user in the embodiment as shown in FIG. 1. The computer device may be implemented as a device configured to use a model to perform image anomaly recognition. As shown in FIG. 2, the method for processing an image may include the following operations.

Operation 210: Extract a first feature map from the image.

In all embodiments of the present disclosure, the computer device may perform processing such as convolution and pooling on the image to obtain the first feature map.

In all embodiments of the present disclosure, the computer device may extract, from the image, multiple feature maps of different scales (where the scale refers to dimensions of the feature map) and fuse these feature maps into the first feature map (e.g., concatenate the feature maps as different channels).

For example, the computer device may perform feature extraction on the image at different levels. For the feature extraction at the 1st level, the computer device performs, for example, convolution on the input image to obtain a feature map of the 1st level. For the feature extraction at a subsequent level, the computer device performs, for example, convolution on the feature map(s) of the previous level(s) to obtain a feature map of the subsequent level. A scale of the feature map of a previous level is greater than or equal to that of the feature map at a subsequent level.

In all embodiments of the present disclosure, when the scale of the feature map at the previous level is greater than the scale of the feature map at the subsequent level, the computer device may perform following operations when fusing the feature maps of different scales. The computer device first converts the feature maps into the same scale. For example, the feature maps are converted into the scale of the feature map of the last level. Then, the feature maps of the same scale are concatenated to obtain the first feature map.

Alternatively, when fusing the feature maps of the same scale, the computer device may calculate a mean or a weighted average of these feature maps (e.g., elementwise since the feature maps are represented by matrices) to obtain the first feature map.

Operation 220: Encode the first feature map and then decode the encoded first feature map to obtain a reconstructed feature map.

The process of encoding and decoding on the first feature map may be regarded as a process of intercorrelating and then reconstructing on the feature maps of all scales, which are embodied in the first feature map.

For example, the computer device may perform multi-stage processing on features of all dimensions in the first feature map. In each stage of the processing, the computer device may perform, for example, weighting, convolution, and pooling, on a feature map using an attention mechanism and output a processing result to the next stage. The final result of the multi-stage processing is the reconstructed feature map.

Operation 230: Input a difference between the first feature map and the reconstructed feature map into a discriminator to obtain a first result comprising a respective first value for each pixel of the image, where the respective first value for each pixel is a first measurement of a probability of such pixel belonging to an anomaly contained in the image.

The discriminator is a machine learning model trained using a sample image containing the anomaly, and the sample image containing the anomaly (hereinafter also called the first sample image) is obtained through image composition on a basis of an image not containing the anomaly.

Herein an image containing the anomaly may be generated in advance on a basis of an image not containing the anomaly, and then the discriminator is trained using the image containing the anomaly as a sample (i.e., a sample image). An input of the discriminator is the difference between the reconstructed feature map and the first feature map, and an output of the discriminator is values representing the respective probabilities of the pixels belonging to (i.e., being a part of) an anomaly in the image in operation 210. It is appreciated that the anomaly in the image in operation 210 and the anomaly in the sample image are of the same kind, i.e., they are identical or substantially identical (within a certain threshold determined by the discriminator) to each other in at least one of, for example, shape, color, position, and the like. Thereby, the discriminator can be trained using the sample image to distinguish the anomaly in the image in operation 210.

For example, the image in operation 210 includes H×W pixels. In such case, the first result may include H×W first values in one-to-one correspondence with the H×W pixels.

In all embodiments of the present disclosure, the first value may directly be a value of the probability of its corresponding pixel belonging to the contained anomaly. Alternatively, the first value may be an anomaly score which is positively correlated or negatively correlated to the probability of its corresponding pixel belonging to the contained anomaly.

As an example, the first value is the anomaly score, and the first result is as shown in Table 1 as follows.

Table 1

| 1 | 3 | 2 | 1 | 4 | 1 | 0 | 1 | ... | 0 |
|---|---|---|---|---|---|---|---|---|---|
| 1 | 1 | 2 | 1 | 2 | 0 | 1 | 2 | ... | 1 |
| 0 | 2 | 1 | 4 | **70** | 2 | 2 | 2 | ... | 1 |
| 0 | 1 | 0 | **85** | **92** | **88** | 1 | 0 | ... | 0 |
| 0 | 3 | 1 | 1 | **81** | 3 | 0 | 1 | ... | 3 |
| 1 | 4 | 0 | 2 | 1 | 1 | 3 | 3 | ... | 3 |
| ... | ... | ... | ... | ... | ... | ... | ... | ... | ... |
| 2 | 2 | 2 | 1 | 1 | 0 | 1 | 1 | ... | 2 |

In Table 1, each cell represents a first value represented by the anomaly score, and a range of the anomaly score is [0, 100]. A higher anomaly score represents a higher probability that a corresponding pixel belongs to the contained anomaly.

Operation 240: Determine an anomaly-recognition result of the image according to the first feature map, the reconstructed feature map, and the first result.

Here the computer device may determine the probability of each pixel belonging to the anomaly contained in the image directly from (in comparison to the above determination via processing of the discriminator) the difference between the first feature map and the reconstructed feature map. Then, the computer device may obtain the anomaly-recognition result of the image by referring to both the directly determined probability and the first result.

In summary, after the first feature map is extracted from the image, it is reconstructed as the reconstructed feature map feature through encoding and decoding. Afterwards, the discriminator performs anomaly detection on a basis of the difference between the reconstructed feature map and the first feature map, such that the first result indicating the respective probability of each pixel belonging to the contained anomaly is obtained. Then, the feature maps before and after the reconstruction, as well as the first result serve as a basis of obtaining the anomaly-recognition result. That is, during determination of whether the pixels in the image belong to the contained anomaly, not only the feature maps before and after the reconstruction are directly used for the determination, but also the difference between the feature maps before and after the reconstruction is fed into the discriminator to provide further reference. In this way, whether the pixels in the image belong to the contained anomaly are comprehensively determined with reference to the feature maps before and after the reconstruction and the result output by the discriminator, and image anomaly detection can be implemented at a pixel level with improved accuracy. In addition, the first sample image, which is configured for training the discriminator, is obtained through image composition based on the second sample image. Therefore, it is not necessary to collect and label images manually in a training process of the discriminator, and the training can be implemented as unsupervised learning. A large quantity of samples can thus be prepared for training the discriminator, which improves an effect of the training and reduces a difference in effect with respect to training the discriminator using real anomaly images. Accuracy of the discriminator is ensured, and hence accuracy of the pixel-level anomaly detection performed on the image through the discriminator is also ensured.

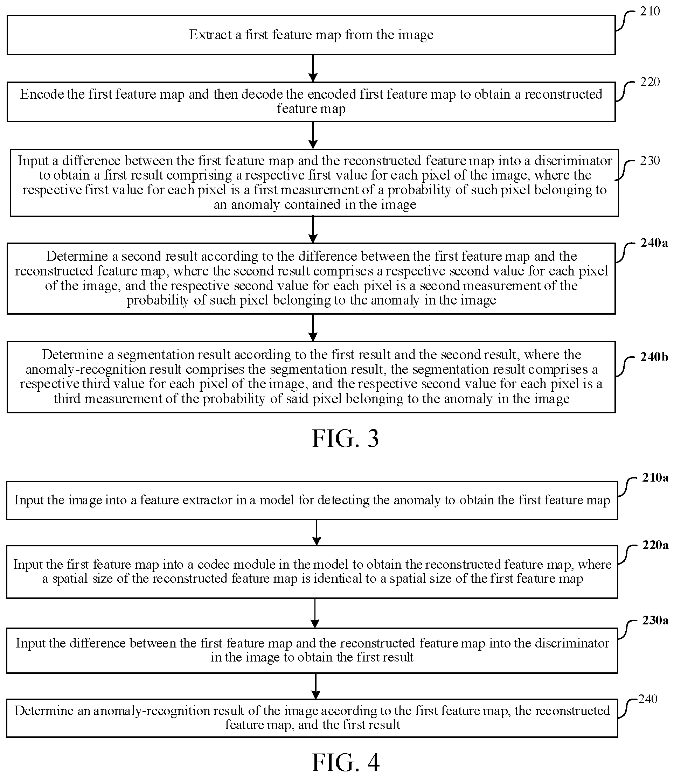

Based on the embodiment shown in FIG. 2, FIG. 3 is a schematic flowchart of a method for processing an image according to an embodiment of the present disclosure. As shown in FIG. 3, operation 240 may be implemented as operation 240a and operation 240b.

Operation 240a: Determine a second result according to the difference between the first feature map and the reconstructed feature map, where the second result comprises a respective second value for each pixel of the image, and the respective second value for each pixel is a second measurement of the probability of such pixel belonging to the anomaly in the image.

As an example, the second result includes $H \times W$ second values, the $H \times W$ second values are in one-to-one correspondence with the $H \times W$ pixels in the image, as described in operation 210. The second value is another measurement (with respect to the first value) of the probability of the corresponding pixel belonging to .

In all embodiments of the present disclosure, the second value may directly be a value of the probability of its corresponding pixel belonging to the contained anomaly. Alternatively, the second value may be an anomaly score which is positively correlated or negatively correlated to the probability of its corresponding pixel belonging to the contained anomaly.

In all embodiments of the present disclosure, a size of a difference matrix (i.e., the difference is represented by a matrix, which is a two-dimensional matrix having the widthwise dimension and the height-wise dimension of the first feature map and the reconstructed feature map, and each element is a vector following a dimension having a dimension equal to a quantity of channels in each of the first feature map and the reconstructed feature map) between the first feature map and the reconstructed feature map may be smaller than a size of the image in pixels. In this case, determining the second result according to the difference between the first feature map and the reconstructed feature map may comprise following operations. An L2 norm of each element of the difference matrix between the first feature map and the reconstructed feature map is calculated (i.e., the L2 norms are calculated elementwise) to obtain an L2-norm matrix (of the same size as the difference matrix). The L2 norm matrix is up-sampled (i.e., its spatial size is enlarged to the size of the image in pixels through up-sampling) to obtain the second result.

Here the computer device may subtract the reconstructed feature map from the first feature map elementwise to obtain the difference matrix between the first feature map and the reconstructed feature map. The L2-norm matrix of the difference matrix is calculated and then up-sampled to obtain the second result.

As an example, the spatial size (i.e., neglecting the quantity of channels) of the first feature map and the reconstructed feature map are both $h \times w$, which is smaller than $H \times W$ (i.e., the size of the image in pixels). For example, $h = H/16$, and $w = W/16$. The computer device may calculate a difference between each layer (channel) in the first feature map and the corresponding layer (channel) in the reconstructed feature map through the elementwise subtraction to obtain the difference matrix and then calculate the L2-norm matrix from the different matrix. A size of the L2-norm matrix is also equal to $h \times w$, and it is up-sampled (for example, through bilinear interpolation) to obtain the second result. Hence, the second result can be also presented by a matrix comprising $H \times W$ elements (i.e., the second values).

Here the elementwise subtraction between the first feature map and the reconstructed feature map refers to subtracting a vector comprising all elements (considering the case of multiple channels) located at the $i^{th}$ row and the $j^{th}$ column in the reconstructed feature map from a vector comprising all elements located at the $i^{th}$ row and the $j^{th}$ column in the first feature map, where i ranges from 1 to h and j ranges from 1 to w. Thereby, $h \times w$ vectors are obtained and form the difference matrix.

This step is performed after the one or more layers in the first feature map interact with each other and are reconstructed. The L2-norm matrix of the difference between the feature maps before and after the interaction and reconstruction is calculated as a reference of determination on whether each pixel of the image belongs to the contained anomaly. It is ensured that image anomaly detection is based on a reconstruction error of the feature map.

Operation 240b: Determine a segmentation result according to the first result and the second result, where the anomaly-recognition result comprises the segmentation result, the segmentation result comprises a respective third value for each pixel of the image, and the respective second value for each pixel is a third measurement of the probability of said pixel belonging to the anomaly in the image.

As an example, the segmentation result includes $H \times W$ third values, the $H \times W$ third values are in one-to-one correspondence with the $H \times W$ pixels in the image as described in operation 210. Here the third value is another measurement (with respect to the first and second values) of the probability of the corresponding pixel belonging to the contained anomaly.

In all embodiments of the present disclosure, the third value may directly be a value of the probability of its corresponding pixel belonging to the contained anomaly. Alternatively, the third value may be an anomaly score which is positively correlated or negatively correlated to the probability of its corresponding pixel belonging to the contained anomaly.

Herein the size of the first result and the size of the second result are the same, e.g., both are $H \times W$. In a process of determining the segmentation result, the third value for each element position in the first/second result is determined to obtain the segmentation result that also has a size of $H \times W$.

As an example, the third value for each element position is determined in a following manner. Assuming the element position is a crosspoint of the $m^{th}$ row and the $n^{th}$ column, the first value at the crosspoint of the $m^{th}$ row and the $n^{th}$ column in the first result and the second value at the crosspoint of the $m^{th}$ row and the $n^{th}$ column are fetched for calculate the third value for this each element position, where m is an integer ranging from 1 to H and n is an integer ranging from a to W. Thereby, the $H \times W$ third values in the segmentation result are obtained.

Hence, the computer device refers to both the reconstruction error of the feature map and the discriminator's processing of the difference between the feature maps before and after the reconstruction to determine whether each pixel in the image belongs to the contained anomaly in a comprehensive way. Accuracy of pixel-level anomaly detection is ensured.

In all embodiments of the present disclosure, determining the segmentation result according to the first result and the second result may comprise a following operation.

A weighted sum or a weighted average of the first result and the second result is calculated to obtain the segmentation result.

As an example, the computer device may calculate the weighted sum or the weighted average elementwise. That is, the weighted sum or the weighted average of an element located at each element position in the first result and an element located at the same element position in the second result is calculated to obtain $H \times W$ results. These $H \times W$ results serve as the third values and form the segmentation result.

For example, the weighted summation or weighted averaging is performed in a following manner. Assuming the element position is a crosspoint of the $m^{th}$ row and the $n^{th}$ column, the weighted sum/average of the first value at the crosspoint of the $m^{th}$ row and the $n^{th}$ column in the first result and the second value at the crosspoint of the $m^{th}$ row and the $n^{th}$ column in the second result is calculated to obtain the third value for this each element position, where m is an integer ranging from 1 to H and n is an integer ranging from a to W. Thereby, the $H \times W$ third values in the segmentation result are obtained.

Here the computer device performs the weighted summation or weighted average on the values at the same position in the first result and the second result. Weights of the first result and the second result may be configured on requirement. Hence, flexibility and accuracy are ensured when obtaining the segmentation result with reference to the first result and the second result.

In all embodiments of the present disclosure, the method may further comprise a following step.

A classification result is determined according to the segmentation result, where the anomaly-recognition result comprises the classification result, and the classification result indicates a probability of the image containing the anomaly.

In all embodiments of the present disclosure, the classification result may directly be a value of the probability of the image, as described in operation 210, containing the anomaly. Alternatively, the classification result may be an anomaly score which is positively correlated or negatively correlated to the probability of the image containing the anomaly.

Here the segmentation result is a pixel-level result of anomaly recognition. In other words, the segmentation result indicates whether each pixel of the image belongs to any anomaly. Using this result, the computer device may further obtain an image-level result of anomaly recognition. Hence, the classification result indicates whether the image is an "anomalous" image (the image containing the anomaly) globally. Diversity of the anomaly-recognition result of the image is improved, and applicable scenarios of the image anomaly recognition are more diversified.

In all embodiments of the present disclosure, determining the classification result according to the segmentation result may comprise a following operation.

A maximum value among the third values in the segmentation result is determined, or a standard deviation of the third values in the segmentation result is calculated, to obtain the classification result.

Here the computer device may determine the maximum value or the standard deviation of the third values in the segmentation result to serve as the image-level result of anomaly detection. A solution for determining the image-level result of anomaly recognition from the pixel-level result of anomaly recognition is provided, and accuracy of the image-level result is ensured.

Based on the embodiment shown in FIG. 2 or FIG. 3, FIG. 4 is a schematic flowchart of a method for processing an image according to an embodiment of the present disclosure. As shown in FIG. 4, operation 210, operation 220, and operation 230 may be respectively implemented as operation 210a, operation 220a, and operation 230a.

Operation 210a: Input the image into a feature extractor in a model for detecting the anomaly to obtain the first feature map.

As an example, dimensions of the image data input into the feature extractor are $3 \times H \times W$, which means that a size of image in pixels are $H \times W$ and data of each pixel comprises three channels (for example, the R, G, and B channels). The feature extractor outputs the first feature map of which a spatial size is $h \times w$ after processing the image data having the dimensions of $3 \times H \times W$.

Operation 220a: Input the first feature map into a codec module in the model to obtain the reconstructed feature map, where a spatial size of the reconstructed feature map is identical to a spatial size of the first feature map.

As an example, a spatial size of the first feature map input into the codec module is $h \times w$, and the codec module may output the reconstructed feature map of the same spatial size $h \times w$ after processing the first feature map.

Operation 230a: Input the difference between the first feature map and the reconstructed feature map into the discriminator in the image to obtain the first result.

As an example, a size of the difference (e.g., the difference matrix), between the reconstructed feature map and the first feature map, input into the discriminator is $h \times w$, and the discriminator may output the first result (e.g., a matrix) having a size of $H \times W$ after processing the difference.

The model for detecting the anomaly is a machine learning model obtained through unsupervised training using a sample image not containing the anomaly, i.e., the second sample image.

Here the computer device may perform the anomaly recognition on the image by using the trained model to ensure efficiency and accuracy of the anomaly recognition.

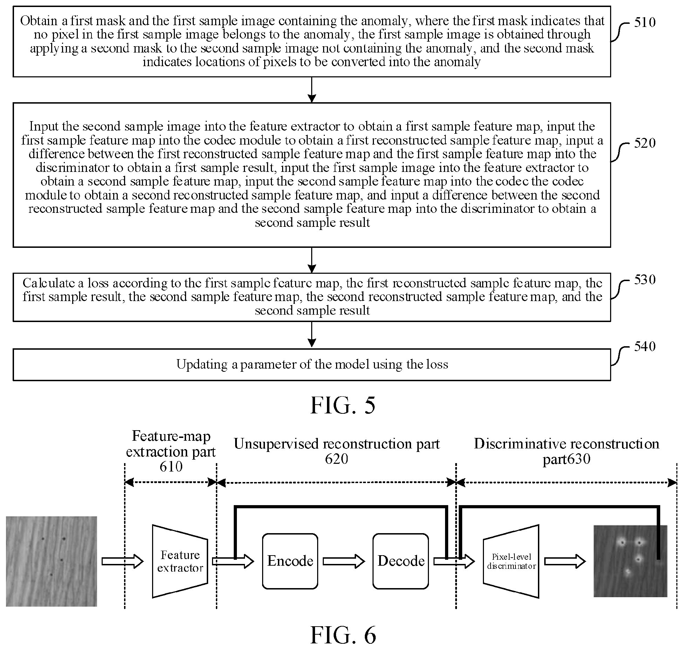

Based on the embodiment shown in FIG. 4, FIG. 5 is a schematic flowchart of a method for processing an image according to an embodiment of the present disclosure. The method may be performed by a computer device. For example, the computer device may be a server, or the computer device may be a terminal, or the computer device may include a server and a terminal. The server may be the server 160 as shown in FIG. 1, and the terminal may be the terminal 140 used by the developer as shown in FIG. 1. The computer device may be implemented as a model training device configured to train models. As shown in FIG. 5, before operation 210, the method may include the following operations.

Operation 510: Obtain a first mask and the first sample image, where the first mask indicates that no pixel in the second sample image (i.e., the sample image not containing the anomaly) belongs to the anomaly, the first sample image is obtained through applying a second mask to the second sample image, and the second mask indicates locations of pixels to be converted into the anomaly.

Because the second sample image is the sample image not containing the anomaly, the first mask for indicating the anomaly in the second sample image indicates that none of pixels in the second sample image belongs to the anomaly. As an example, a size of the second sample image in pixels is $H \times W$, the first mask is a two-dimensional matrix having a size of $H \times W$. Each element in this two-dimensional matrix corresponds to a respective pixel in the second sample image. A value of each element in this two-dimensional matrix may be, for example, 0 to indicate that no pixel in the second sample image belongs to the anomaly.

The computer device may obtain the second mask preset by the developer, or generate the second mask randomly, to determine pixels in the second sample image that are to be rendered as the anomaly when converting the second sample image into the second sample image. For example, a size of the second sample image in pixels is $H \times W$, the second mask is a two-dimensional matrix having a size of $H \times W$. Each element in this two-dimensional matrix corresponds to a respective pixel in the second sample image. A value of each element in this two-dimensional matrix indicates whether the corresponding pixel is to be rendered as a part of the anomaly. For example, the element having a value of 1 indicates that the corresponding pixel in the second sample image is to be rendered as a part of the anomaly, and the element having a value of 0 indicates that the corresponding pixel in the second sample image is not to be rendered as a part of the anomaly.

The computer device may further generate the first sample image through image composition on a basis of the second mask and the first sample image. For example, the computer device may modify pixels in the second sample image that are indicated as "to be rendered as a part of the anomaly" by the second mask. As an example, a value of the pixel indicated by the second mask is randomly altered (e.g., replaced by a preset value) to obtain the first sample image. In all embodiments of the present disclosure, obtaining the first sample image containing the anomaly through image composition on a basis of the second sample image not containing the anomaly may refer to the above processing.

Operation 520: Input the second sample image into the feature extractor to obtain a first sample feature map, input the first sample feature map into the codec module to obtain a first reconstructed sample feature map, input a difference between the first reconstructed sample feature map and the first sample feature map into the discriminator to obtain a first sample result, input the first sample image into the feature extractor to obtain a second sample feature map, input the second sample feature map into the codec the codec module to obtain a second reconstructed sample feature map, and input a difference between the second reconstructed sample feature map and the second sample feature map into the discriminator to obtain a second sample result.

This operation is a process of processing the first sample image and the second sample image using components (namely, the feature extractor, the codec, and the discriminator) in the model for detecting the anomaly detection to obtain the sample results (i.e., recognition results of the model on the sample images). Details of this process can refer to the foregoing processing performed by these components to obtain the first result, and hence the details are not repeated herein.

Operation 530: Calculate a loss according to the first sample feature map, the first reconstructed sample feature map, the first sample result, the second sample feature map, the second reconstructed sample feature map, and the second sample result.

During the training of the model, the first mask and the second mask serve as labels of the second sample image and the first sample image, respectively. The calculation of the loss is thus based on the labels and based on the intermediate results (e.g., the reconstructed feature map) and a final output obtained by the model processing the sample images.

In all embodiments of the present disclosure, calculating the loss according to the first sample feature map, the first reconstructed sample feature map, the first sample result, the second sample feature map, the second reconstructed sample feature map, and the second sample result may comprise following operations.

A first loss representing a difference between the first sample feature map and the first reconstructed sample feature map is determined.

A second loss representing a difference between the first sample result and the first mask is determined.

A third loss representing a difference between the second sample feature map and the second reconstructed sample feature map is determined.

A fourth loss representing a difference between the second sample result and the second mask is determined.

The foregoing calculated loss comprises the above first to fourth losses. The first loss and the third loss origin from the reconstruction of the feature map of the sample image in the model, and the second loss and the fourth loss origin from the prediction of the model on which pixels in the sample image belong to the contained anomaly.

Here the components in the model are trained with reference to the losses generated in the reconstruction process and the losses generated in the prediction process, and hence both performances of reconstructing feature maps and predicting the pixels belonging to the contained anomaly can be improved. The model can thus generate more accurate detection results in application.

Operation 540: Updating a parameter of the model using the loss.

As an example, the computer device may update parameters of the feature extractor and the codec by using the first loss and the third loss, and update parameters of the feature extractor, the codec, and the discriminator by using the second loss and the fourth loss.

Here the model training is based on unsupervised discriminative reconstruction, and the trained model is configured for implementing image anomaly detection. A pixel-level discriminator is provided to further enhance differentiation between the normal sample (not containing the anomaly) and an anomalous sample (containing the anomaly) and refine a reconstruction error. During an inference stage, i.e., a stage of using the model for image anomaly detection, results of the unsupervised reconstruction and the pixel-level discriminator are integrated to improve performance of pixel-level anomaly segmentation significantly.

FIG. 6 is a schematic diagram of architecture of an unsupervised discriminative reconstruction network according to an embodiment of the present disclosure. As shown in FIG. 6, the network architecture mainly includes three modules: a feature-map extraction part 610, an unsupervised reconstruction part 620, and a pixel-level discriminative reconstruction part 630.

The following separately describes the three parts in the network architecture.

(1) Feature-map extraction. Similar to existing anomaly detection, feature map extraction is performed though a trained model on ImageNet. As an example, given an input image $I \in \mathbb{R}^{3 \times H \times W}$, multiple feature maps $\{Z_i\}_{i=1}^{4}$ of different scales are extracted from the 1st to the 4th stages of a trained convolutional network $\mathcal{F}$ (for example, EfficientNet-b4), where:

$$Z_i = \mathcal{F}(I).$$

$Z_i \in \mathbb{R}^{c_i \times h_i \times w_i}$, $c_i$ represents a quantity of channels, and $h_i \times w_i$ represents a scale (specifically, a spatial size) of an $i^{th}$ feature map. The last (bottommost) layer of the feature map is weak in semantic but has high resolution, using its spatial size brings limited improvement on performance and results in high calculation costs. Hence, in order to concatenate feature maps $\{Z_i\}_{i=1}^{4}$ of different scales, the spatial sizes of all feature maps are adjusted to the same size ($h_4 \times w_4$), that is, a size of the smallest feature map. These adjusted feature maps are concatenated as different channels. An entire process may be expressed as:

$$F = \text{concat}(\{\text{resize}(Z_i, (h, w))\}_{i=1}^{4}).$$

$F \in \mathbb{R}^{c \times h \times w}$, $c = \sum_{i=1}^{4} c_i$, $h = h_4$, and w= $w_4$.

The feature extraction part 610 may use any trained model that is based on a convolutional neural network or a Transformer architecture.

(2) Unsupervised reconstruction. The unsupervised reconstruction utilizes standard Transformer architecture and includes two stages: encoding and decoding. First, a linear projection layer with position embedding is used to perform dimension reduction on the multi-scale feature map F extracted in the above description, and then global interaction and reconstruction are performed on the feature map F by using an encoding structure and a decoding structure that are formed by a series of Transformer blocks. Each Transformer block includes a multi-head attention network and a fully connected feed forward network. Finally, dimension raising is performed on an output result of the decoding stage by using a linear projection layer for restoring to the original scale, and the output is denoted as $\hat{F}$. Mean square errors (MSEs) between the reconstructed feature map and the original feature map are calculated elementwise by using a reconstruction loss function as follows:

$$\mathcal{L}_{res} = \frac{1}{c \times h \times w} \sum_{i=1}^{c} \sum_{j=1}^{h} \sum_{k=1}^{w} (F_{i,j,k} - \hat{F}_{i,j,k})^2.$$

A network structure of the unsupervised reconstruction part may be the Transformer architecture, may be a convolutional neural network, may be a fully connected neural network, or the like.

(3) Discriminative reconstruction. Performance of anomaly segmentation is still poor when only unsupervised reconstruction is used. When training is performed only on samples having no anomaly, weak discrimination between a normal sample and an anomalous sample in a feature space may be caused. To be specific, when a difference between the normal sample and the anomalous sample is not significant, it is difficult for the trained model to recognize the anomalous sample. Hence, a discriminator trained to enhance differentiation between the normal sample and the anomalous sample is beneficial. A simple implementation may be training a binary classifier based on a normal image and an anomalous image. However, for an unsupervised anomaly detection task, it is possible that only the normal image can be easily obtained as training samples. This is also a general case in actual industrial detection applications, because defective products are not common and it is difficult to collect a large number of defective products. In order to train the discriminator, the anomalous image may be generated through image composition by using the normal image. Herein the anomalous image may be generated at a pixel level, so that the discriminator is trained using the generated image. In addition, a lightweight discriminator is designed herein to refine a reconstruction error of a double-mask automatic codec.

Assuming there is a normal sample image $I^n$ and its anomaly mask $Y^n$, an anomalous image $I^s$ is generated by applying another anomaly mask $Y^s$ to the normal sample image $I^n$. Then, the normal image and the generated anomalous image $\{I^t | t = n, s\}$ are input into a multi-scale feature extractor, and a multi-layer feature map is output as $\{F^t | t = n, s\}$. Then, $\{F^t | t = n, s\}$ is reconstructed by using an unsupervised reconstruction network, and the reconstructed feature map is denoted by $\{\hat{F}^t | t = n, s\}$. Here elementwise subtraction is performed between the original feature map and the reconstructed feature map to obtain a difference between the original feature map and the reconstructed feature map. The subtraction is as follows.

$$E^t = \left| F^t - \hat{F}^t \right|, t = n, s$$

The discriminator comprises multiple convolution blocks to learn a feature, followed by a $1 \times 1$ convolution layer for pixel segmentation. Each convolution block includes a $3 \times 3$ convolution layer, a BatchNorm layer, a ReLU layer, and a

$2 \times 2$ deconvolution layer. The absolute reconstruction error $\{E^t | t = n, s\}$ is input into the discriminator to obtain an anomaly-estimation map $\hat{Y}^t$. $\hat{Y}^t$ is scaled to a size of $Y^t$ such that a loss between $\hat{Y}^t$ and its ground truth $Y^t$ can be obtained. Considering that anomalous pixels are usually a minority in the image, a loss function may be calculated by using the Dice loss, which is effective for learning from extremely imbalanced data. The loss may be calculated as follows.

$$\mathcal{L}_{res} = 1 - \frac{2 \sum_{i=1}^{H} \sum_{j=1}^{W} \hat{Y}_{i,j}^{t} Y_{i,j}^{t}}{\sum_{i=1}^{H} \sum_{j=1}^{W} \hat{Y}_{i,j}^{t\,2} + \sum_{i=1}^{H} \sum_{j=1}^{W} Y_{i,j}^{t\,2}}$$

$(i, j)$ represents a spatial position of $Y^t$ or $\hat{Y}^t$.

A process of applying the trained model is as follows.

Pixel-level anomaly segmentation. A result of anomaly segmentation is a map of anomaly scores of all pixels. For unsupervised reconstruction, the map of anomaly scores is calculated as an up-sampled L2-norm matrix of the reconstruction error through an equation as below.

$$S_{res} = \left\| F - \hat{F} \right\|_{2} \in \mathbb{R}^{H \times W}$$

For discriminative reconstruction, the map of anomaly scores is predicted as $\hat{Y} \in \mathbb{R}^{H \times W}$. Finally, $S_{res}$ and $\hat{Y}$ are combined as a map for anomaly segmentation through an equation as follows.

$$S = \omega \cdot S_{res} + (1 - \omega) \cdot \hat{Y}$$

$\omega \in [0,1]$ represents a weight.

Image-level anomaly classification. Anomaly classification aims to detect whether an image contains an anomaly. A maximum value or a standard deviation is calculated using all elements in a pixel-level prediction error S to obtain an image-level anomaly score.

Test on different solutions. EfficientNet-b4 trained on ImageNet is selected as a basic extracted network feature. A size of an input image is $224 \times 224$. Feature maps from three stages are extracted and scaled to the same size $14 \times 14$, and finally undergo channel-wise concatenation, to form an original feature with a dimension of $272 \times 14 \times 14$. An encoder and a decoder each use multiple Transformer blocks.

Main results of the tests are as follows.

(1) This solution can resolve inaccurate positioning and segmentation of an unsupervised reconstruction solution at a pixel level.

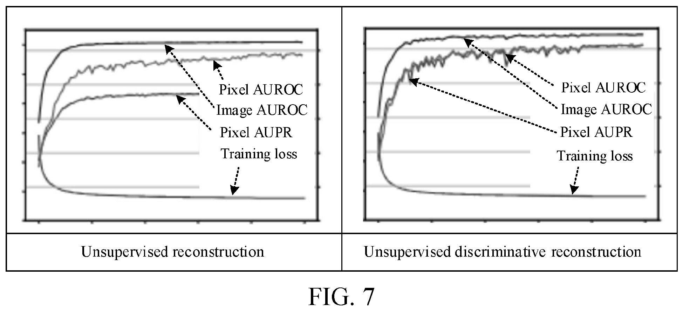

FIG. 7 is a graph showing test results according to an embodiment of the present disclosure. FIG. 7 shows a schematic diagram of a comparison, of training losses and test indicators on an MVTec data set, between a common unsupervised reconstruction network and an encoding-decoding network of unsupervised discriminative reconstruction provided herein.
The results indicate that the common unsupervised reconstruction network shows good performance only on image-level anomaly detection. The encoding-decoding network provided herein has significant performance enhancement on pixel-level defect segmentation.

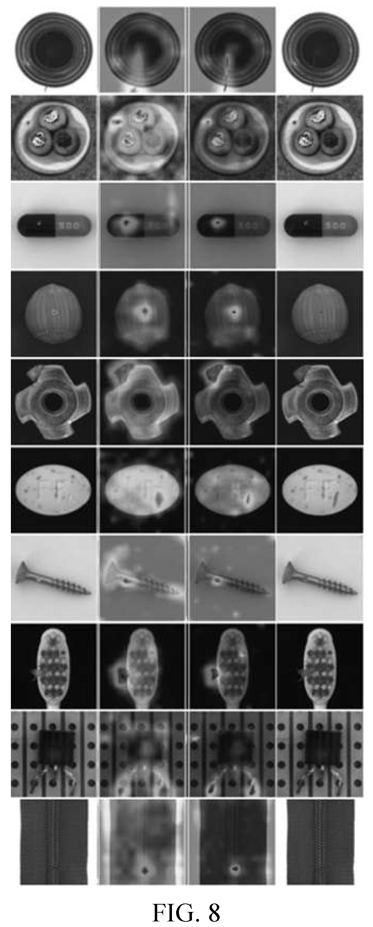

(2) The solution provided herein significantly enhances performance on unified anomaly detection of a real industrial anomaly-detection data set, especially on pixel-level anomaly segmentation. FIG. 8 is a schematic diagram of results of anomaly recognition according to an embodiment of the present disclosure. As shown in FIG. 8, for 15 categories of MVTec, compared with the common unsupervised anomaly detection method (the 2nd column), a boundary of the detected anomaly in the method provided herein (the 3rd column) is more refined and accurate and is closer to the result of manual labelling (the 4th column).

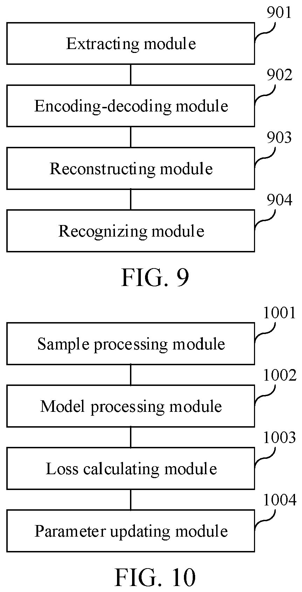

FIG. 9 is a block diagram of a structure of an apparatus for processing an image according to an embodiment of the present disclosure. As shown in FIG. 9, the apparatus includes an extracting module 901, an encoding-decoding module 902, a reconstructing module 903, and a recognizing module 904.

The extracting module 901 is configured for extracting a first feature map from the image.

The encoding-decoding module 902 is configured for encoding the first feature map and then decoding the encoded first feature map to obtain a reconstructed feature map.

The reconstructing module 903 is configured for inputting a difference between the first feature map and the reconstructed feature map into a discriminator to obtain a first result comprising a respective first value for each pixel of the image, where the respective first value for each pixel is a first measurement of a probability of said pixel belonging to an anomaly in the image, and the discriminator is a machine learning model trained using a first sample image, and the first sample image is obtained through image composition on a basis of an image not containing the anomaly.

The recognizing module 904 is configured for determining an anomaly-recognition result of the image according to the first feature map, the reconstructed feature map, and the first result.

In all embodiments of the present disclosure, the recognizing module 904 may be configured for: determining a second result according to the difference between the first feature map and the reconstructed feature map, where the second result comprises a respective second value for each pixel of the image, and the respective second value for each pixel is a second measurement of the probability of said pixel belonging to the anomaly in the image; and determining a segmentation result according to the first result and the second result, where the anomaly-recognition result comprises the segmentation result, the segmentation result comprises a respective third value for each pixel of the image, and the respective second value for each pixel is a third measurement of the probability of said pixel belonging to the anomaly in the image.

In all embodiments of the present disclosure, a spatial size of the difference between the first feature map and the reconstructed feature map may be smaller than a size of the image in pixels. The recognizing module 904 is configured for: calculating an L2 norm of each element of a difference matrix between the first feature map and the reconstructed feature map to obtain an L2-norm matrix, and up-sampling the L2 norm matrix to obtain the second result.

In all embodiments of the present disclosure, the recognition module 904 may be configured for calculating a weighted sum or a weighted average of the first result and the second result to obtain the segmentation result.

In all embodiments of the present disclosure, the recognition module 904 may be configured for determining a classification result according to the segmentation result, where the anomaly-recognition result comprises the classification result, and the classification result indicates a probability of the image containing the anomaly.

In all embodiments of the present disclosure, the recognition module 904 may be configured for obtaining a maximum value among the third values in the segmentation result or calculating a standard deviation of the third values in the segmentation result to obtain the classification result.

In all embodiments of the present disclosure, the extracting module 901 may be configured for inputting the image into a feature extractor in a model for detecting the anomaly to obtain the first feature map.

The encoding-decoding module 902 may be configured for inputting the first feature map into a codec module in the model to obtain the reconstructed feature map, wherein a spatial size of the reconstructed feature map is identical to a spatial size of the first feature map.

The reconstruction module 903 may be configured for inputting the difference between the first feature map and the reconstructed feature map into the discriminator in the image to obtain the first result.

The model is a machine learning model obtained through unsupervised training using the second sample image.

In all embodiments of the present disclosure, the apparatus may further comprise a sample processing module, a model processing module, a loss calculating module, and a parameter updating module.

The sample processing module is configured for obtaining a first mask and the first sample image, wherein the first mask indicates that no pixel in the second sample image belongs to the anomaly, the first sample image is obtained through applying a second mask to the second sample image, and the second mask indicates locations of pixels to be converted into the anomaly.

The model processing module is configured for: inputting the second sample image into the feature extractor to obtain a first sample feature map; inputting the first sample feature map into the codec module to obtain a first reconstructed sample feature map; inputting a difference between the first reconstructed sample feature map and the first sample feature map into the discriminator to obtain a first sample result; inputting the first sample image into the feature extractor to obtain a second sample feature map; inputting the second sample feature map into the codec the codec module to obtain a second reconstructed sample feature map; and inputting a difference between the second reconstructed sample feature map and the second sample feature map into the discriminator to obtain a second sample result.

The loss calculating module is configured for calculating a loss according to the first sample feature map, the first reconstructed sample feature map, the first sample result, the second sample feature map, the second reconstructed sample feature map, and the second sample result.

The parameter updating module is configured for updating a parameter of the model using the loss.

In all embodiments of the present disclosure, the loss obtaining module may be configured for: determining a first loss representing a difference between the first sample feature map and the first reconstructed sample feature map; determining a second loss representing a difference between the first sample result and the first mask; determining a third loss representing a difference between the second sample feature map and the second reconstructed sample feature map; and determining a fourth loss representing a difference between the second sample result and the second mask.

Herein after the first feature map is extracted from the image, it is reconstructed as the reconstructed feature map feature through encoding and decoding. Afterwards, the discriminator performs anomaly detection on a basis of the difference between the reconstructed feature map and the first feature map, such that the first result indicating the respective probability of each pixel belonging to the contained anomaly is obtained. Then, the feature maps before and after the reconstruction, as well as the first result serve as a basis of obtaining the anomaly-recognition result. That is, during determination of whether the pixels in the image belong to the contained anomaly, not only the feature maps before and after the reconstruction are directly used for the determination, but also the difference between the feature maps before and after the reconstruction is fed into the discriminator to provide further reference. In this way, whether the pixels in the image belong to the contained anomaly are comprehensively determined with reference to the feature maps before and after the reconstruction and the result output by the discriminator, and image anomaly detection can be implemented at a pixel level with improved accuracy. In addition, the first sample image, which is configured for training the discriminator, is obtained through image composition based on the second sample image. Therefore, it is not necessary to collect and label images manually in a training process of the discriminator, and the training can be implemented as unsupervised learning. A large quantity of samples can thus be prepared for training the discriminator, which improves an effect of the training and reduces a difference in effect with respect to training the discriminator using real anomaly images. Accuracy of the discriminator is ensured, and hence accuracy of the pixel-level anomaly detection performed on the image through the discriminator is also ensured.

FIG. 10 is a block diagram of a structure of an apparatus for processing an image according to an embodiment of the present disclosure. As shown in FIG. 10, the apparatus includes a sample processing module 1001, a model processing module 1002, a loss calculating module 1003, and a parameter updating module 1004.

The sample processing module 1001 is configured for obtaining a first sample image, a first mask, and a second sample image, where the first mask indicates that no pixel in a first sample image belongs to an anomaly, the second sample image is an image containing the anomaly and is obtained through applying a second mask to the first sample image, and the second mask indicates locations of pixels, that are to be converted into the anomaly, in the first sample image.

The model processing module 1002 is configured for: inputting the first sample image into a feature extractor in a model for detecting the anomaly to obtain a first sample feature map; inputting the first sample feature map into a codec module in the model to obtain a first reconstructed sample feature map; inputting a difference between the first reconstructed sample feature map and the first sample feature map into a discriminator in the module to obtain a first sample result; inputting the second sample image into the feature extractor to obtain a second sample feature map; inputting the second sample feature map into the codec the codec module to obtain a second reconstructed sample feature map; and inputting a difference between the second reconstructed sample feature map and the second sample feature map into the discriminator to obtain a second sample result.

The loss calculating module 1003 is configured for calculating a loss according to the first sample feature map, the first reconstructed sample feature map, the first sample result, the second sample feature map, the second reconstructed sample feature map, and the second sample result.

The parameter updating module 1001 is configured for updating a parameter of the model using the loss.

The model with the updated parameters is configured to implement the method according to any embodiment as shown in FIG. 2 to FIG. 4.

In all embodiments of the present disclosure, the loss calculating module is configured for: determining a first loss representing a difference between the first sample feature map and the first reconstructed sample feature map; determining a second loss representing a difference between the first sample result and the first mask; determining a third loss representing a difference between the second sample feature map and the second reconstructed sample feature map; and determining a fourth loss representing a difference between the second sample result and the second mask.

The apparatus for processing an image provided in the foregoing embodiment is illustrated only with an example of division of the foregoing function modules. In a practical application, the foregoing functions may be allocated to and completed by different function modules based on a requirement. That is, an internal structure of the apparatus is divided into different function modules to complete all or some of the functions described above. In addition, the apparatus for processing an image provided in the foregoing embodiment belongs to the same conception as the method for processing an image embodiment. For details of a specific implementation process, refer to the method embodiment, and details are not described herein again.

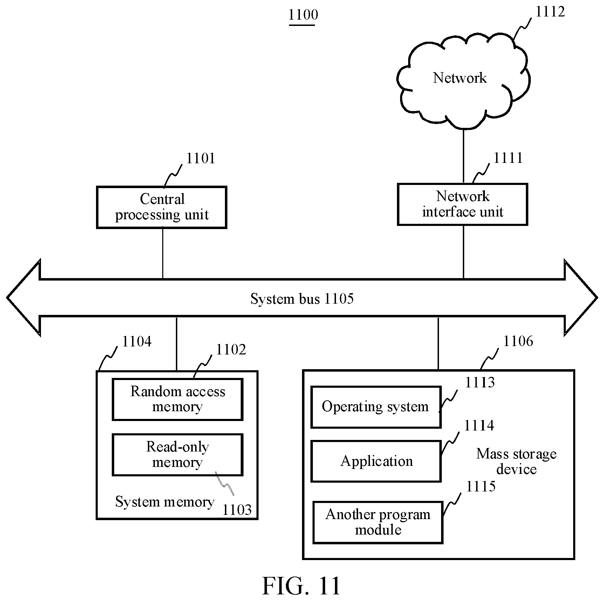

FIG. 11 is a schematic diagram of a structure of a server according to an exemplary embodiment of the present disclosure.

A server 1100 includes a central processing unit (CPU) 1101, a system memory 1104 including a random-access memory (RAM) 1102 and a read-only memory (ROM) 1103, and a system bus 1105 connecting the system memory 1104 and the central processing unit 1101. The server 1100 further includes a mass storage device 1106 configured to store an operating system 1113, an application 1114, and another program module 1115.

The mass storage device 1106 is connected to the central processing unit 1101 by using a mass storage controller (not shown) that is connected to the system bus 1105. The mass storage device 1106 and a computer-readable medium associated with the mass storage device 1106 provide non-volatile storage for the server 1100. In other words, the mass storage device 1106 may include a computer-readable medium (not shown) such as a hard disk or a compact disc read-only memory (CD-ROM) drive.

Generally, the computer-readable medium may include a computer storage medium and a communication medium. The computer storage medium includes volatile and non-volatile media, and removable and non-removable media that are implemented by any method or technology for storing information such as computer-readable instructions, data structures, program modules, or other data. The computer storage medium includes a RAM, a ROM, an erasable programmable read-only memory (EPROM), an electrically erasable programmable read-only memory (EEPROM), a flash memory or another solid-state storage technology, a CD-ROM, a digital versatile disc (DVD) or another optical memory, a tape cartridge, a magnetic tape, a magnetic disk memory, or another magnetic storage device. Certainly, a person skilled in art can know that the computer storage medium is not limited to the foregoing several types. The system memory 1104 and the mass storage device 1106 may be collectively referred to as a memory.

According to embodiments of the present disclosure, the server 1100 may further be connected, through a network such as the Internet, to a remote computer on the network and run. To be specific, the server 1100 may be connected to a network 1112 by using a network interface unit 1111 that is connected to the system bus 1105 or may be connected to another type of network or a remote computer system (not shown) by using the network interface unit 1111.

The memory further includes one or more programs. The one or more programs are stored in the memory and configured to be executed by the CPU.

An embodiment of the present disclosure further provides a computer device. The computer device includes a processor and a memory. The memory has at least one instruction, at least one program, a code set, or an instruction set stored therein. The at least one instruction, the at least one program, the code set, or the instruction set is loaded and executed by the processor to implement the method for processing an image provided in the foregoing method embodiments.

An embodiment of the present disclosure further provides a computer-readable storage medium. The computer-readable storage medium has at least one instruction, at least one program, a code set, or an instruction set stored therein. The at least one instruction, the at least one program, the code set, or the instruction set is loaded and executed by a processor to implement the method for processing an image provided in the foregoing method embodiments.

An embodiment of the present disclosure further provides a computer program product or a computer program. The computer program product or the computer program includes computer instructions. The computer instructions are stored in a computer-readable storage medium. A processor of a computer device reads the computer instructions from the computer-readable storage medium, and the processor executes the computer instructions, so that the computer device performs the method for processing an image according to any one of the foregoing embodiments.

In all embodiments of the present disclosure, the computer-readable storage medium may include: a read-only memory (ROM), a random-access memory (RAM), a solid-state drive (SSD), an optical disc, or the like. The random-access memory may include a resistance random access memory (ReRAM) and a dynamic random-access memory (DRAM). The sequence numbers of the foregoing embodiments of the present disclosure are merely for description purpose and are not intended to indicate priorities of the embodiments.

A person of ordinary skill in the art may understand that all or some of the operations of the embodiments may be implemented by hardware or may be implemented by a program instructing relevant hardware. The program may be stored in a computer-readable storage medium. The storage medium may be a read-only memory, a magnetic disk, an optical disc, or the like.

The foregoing descriptions are merely exemplary embodiments of the present disclosure but are not intended to limit the present disclosure.

**Claims**

1. A method for processing an image, executable by a computer device, wherein the method comprises:

extracting a first feature map from the image;
encoding the first feature map and then decoding the encoded first feature map to obtain a reconstructed feature map;
inputting a difference between the first feature map and the reconstructed feature map into a discriminator to obtain a first result comprising a respective first value for each pixel of the image, wherein the respective first value for each pixel is a first measurement of a probability of said pixel belonging to an anomaly in the image, and the discriminator is a machine learning model trained using a first sample image containing the anomaly, and the sample image is obtained through image composition on a basis of a second sample image not containing the anomaly; and

determining an anomaly-recognition result of the image according to the first feature map, the reconstructed feature map, and the first result.

2. The method according to claim 1, wherein determining the anomaly-recognition result of the image according to the first feature map, the reconstructed feature map, and the first result comprises:

determining a second result according to the difference between the first feature map and the reconstructed feature map, wherein the second result comprises a respective second value for each pixel of the image, and the respective second value for each pixel is a second measurement of the probability of said pixel belonging to the anomaly in the image; and

determining a segmentation result according to the first result and the second result, wherein the anomaly-recognition result comprises the segmentation result, the segmentation result comprises a respective third value for each pixel of the image, and the respective second value for each pixel is a third measurement of the probability of said pixel belonging to the anomaly in the image.

3. The method according to claim 2, wherein a spatial size of the difference between the first feature map and the reconstructed feature map is smaller than a size of the image in pixels; and determining the second result according to the difference between the first feature map and the reconstructed feature map comprises:

calculating an L2 norm of each element of a difference matrix between the first feature map and the reconstructed feature map to obtain an L2-norm matrix, and up-sampling the L2 norm matrix to obtain the second result.

4. The method according to claim 2 or 3, wherein determining the segmentation result according to the first result and the second result comprises:
calculating a weighted sum or a weighted average of the first result and the second result to obtain the segmentation result.

5. The method according to any one of claims 2 to 4, further comprising:
determining a classification result according to the segmentation result, wherein the anomaly-recognition result comprises the classification result, and the classification result indicates a probability of the image containing the anomaly.

6. The method according to claim 5, wherein determining the classification result according to the segmentation result comprises:
obtaining a maximum value among the third values in the segmentation result or calculating a standard deviation of the third values in the segmentation result to obtain the classification result.

7. The method according to any one of claims 1 to 6, wherein:

extracting the first feature map from the image comprises:
inputting the image into a feature extractor in a model for detecting the anomaly to obtain the first feature map;
encoding the first feature and then decoding the encoded first feature to obtain the reconstructed feature map comprises:
inputting the first feature map into a codec module in the model to obtain the reconstructed feature map, wherein a spatial size of the reconstructed feature map is identical to a spatial size of the first feature map;
inputting the difference between the first feature map and the reconstructed feature map into the discriminator to obtain the first result comprises:
inputting the difference between the first feature map and the reconstructed feature map into the discriminator in the image to obtain the first result; and
the model is a machine learning model obtained through unsupervised training using the second sample image.

8. The method according to claim 7, further comprising training the model through:

obtaining a first mask and the first sample image, wherein the first mask indicates that no pixel in the second sample image belongs to the anomaly, the first sample image is obtained through applying a second mask to the second sample image, and the second mask indicates locations of pixels to be converted into the anomaly;

inputting the second sample image into the feature extractor to obtain a first sample feature map;

inputting the first sample feature map into the codec module to obtain a first reconstructed sample feature map;

inputting a difference between the first reconstructed sample feature map and the first sample feature map into the discriminator to obtain a first sample result;

inputting the first sample image into the feature extractor to obtain a second sample feature map;

inputting the second sample feature map into the codec the codec module to obtain a second reconstructed sample feature map;

inputting a difference between the second reconstructed sample feature map and the second sample feature map into the discriminator to obtain a second sample result;

calculating a loss according to the first sample feature map, the first reconstructed sample feature map, the first sample result, the second sample feature map, the second reconstructed sample feature map, and the second sample result; and

updating a parameter of the model using the loss.

9. The method according to claim 8, wherein calculating the loss according to the first sample feature map, the first reconstructed sample feature map, the first sample result, the second sample feature map, the second reconstructed sample feature map, and the second sample result comprises:

determining a first loss representing a difference between the first sample feature map and the first reconstructed sample feature map;

determining a second loss representing a difference between the first sample result and the first mask;

determining a third loss representing a difference between the second sample feature map and the second reconstructed sample feature map; and

determining a fourth loss representing a difference between the second sample result and the second mask.

10. A method for processing an image, executable by a computer device, wherein the method comprises:

obtaining a first sample image, a first mask and a second sample image, wherein the first mask indicates that no pixel in a first sample image belongs to an anomaly, the second sample image is an image containing the anomaly and is obtained through applying a second mask to the first sample image, and the second mask indicates locations of pixels, that are to be converted into the anomaly, in the first sample image;

inputting the first sample image into a feature extractor in a model for detecting the anomaly to obtain a first sample feature map;

inputting the first sample feature map into a codec module in the model to obtain a first reconstructed sample feature map;

inputting a difference between the first reconstructed sample feature map and the first sample feature map into a discriminator in the module to obtain a first sample result;

inputting the second sample image into the feature extractor to obtain a second sample feature map;

inputting the second sample feature map into the codec the codec module to obtain a second reconstructed sample feature map;

inputting a difference between the second reconstructed sample feature map and the second sample feature map into the discriminator to obtain a second sample result;

calculating a loss according to the first sample feature map, the first reconstructed sample feature map, the first sample result, the second sample feature map, the second reconstructed sample feature map, and the second sample result; and

updating a parameter of the model using the loss;

wherein the model with the updated parameters is configured for implementing the method according to any one of claims 1 to 9.

11. An apparatus for processing an image, comprising:

an extracting module, configured for extracting a first feature map from the image;

an encoding-decoding module, configured for encoding the first feature and then decoding the encoded first feature to obtain a reconstructed feature map;

a reconstructing module, configured for inputting a difference between the first feature map and the reconstructed feature map into a discriminator to obtain a first result comprising a respective first value for each pixel of the image, wherein the respective first value for each pixel is a first measurement of a probability of said pixel belonging to an anomaly in the image, and the discriminator is a machine learning model trained using a first sample image containing the anomaly, and the first sample image is obtained through image composition on a basis of a second image not containing the anomaly; and

a recognizing module, configured for determining an anomaly-recognition result of the image according to the first feature map, the reconstructed feature map, and the first result.

12. An apparatus for processing an image, comprising:

a sample processing module, configured for obtaining a first sample image, a first mask, and a second sample image, wherein the first mask indicates that no pixel in a first sample image belongs to an anomaly, the second sample image is an image containing the anomaly and is obtained through applying a second mask to the first sample image, and the second mask indicates locations of pixels, that are to be converted into the anomaly, in the first sample image;

a model processing module, configured for:

inputting the first sample image into a feature extractor in a model for detecting the anomaly to obtain a first sample feature map;

inputting the first sample feature map into a codec module in the model to obtain a first reconstructed sample feature map;

inputting a difference between the first reconstructed sample feature map and the first sample feature map into a discriminator in the module to obtain a first sample result;

inputting the second sample image into the feature extractor to obtain a second sample feature map;

inputting the second sample feature map into the codec the codec module to obtain a second reconstructed sample feature map; and

inputting a difference between the second reconstructed sample feature map and the second sample feature map into the discriminator to obtain a second sample result;

a loss calculating module, configured for calculating a loss according to the first sample feature map, the first reconstructed sample feature map, the first sample result, the second sample feature map, the second reconstructed sample feature map, and the second sample result; and

a parameter updating module, configured for updating a parameter of the model using the loss;

wherein the model with the updated parameters is configured for implementing the method according to any one of claims 1 to 9.

13. A computer device, comprising a processor and a memory, wherein the memory stores at least one program, and the at least one program when loaded and executed by the processor implements the method according to any one of claims 1 to 10.

14. A computer-readable storage medium, storing at least one program, wherein the at least one program when loaded and executed by a processor implements the method according to any one of claims 1 to 10.

15. A computer program product, comprising computer instructions, wherein the computer instructions when executed by a processor implement the method according to any one of claims 1 to 10.

FIG. 1

| | |
|---|---|
| Extract a first feature map from the image | 210 |
| Encode the first feature map and then decode the encoded first feature map to obtain a reconstructed feature map | 220 |
| Input a difference between the first feature map and the reconstructed feature map into a discriminator to obtain a first result comprising a respective first value for each pixel of the image, where the respective first value for each pixel is a first measurement of a probability of such pixel belonging to an anomaly contained in the image | 230 |
| Determine an anomaly-recognition result of the image according to the first feature map, the reconstructed feature map, and the first result | 240 |

FIG. 2

Extract a first feature map from the image — 210

Encode the first feature map and then decode the encoded first feature map to obtain a reconstructed feature map — 220

Input a difference between the first feature map and the reconstructed feature map into a discriminator to obtain a first result comprising a respective first value for each pixel of the image, where the respective first value for each pixel is a first measurement of a probability of such pixel belonging to an anomaly contained in the image — 230

Determine a second result according to the difference between the first feature map and the reconstructed feature map, where the second result comprises a respective second value for each pixel of the image, and the respective second value for each pixel is a second measurement of the probability of such pixel belonging to the anomaly in the image — 240a

Determine a segmentation result according to the first result and the second result, where the anomaly-recognition result comprises the segmentation result, the segmentation result comprises a respective third value for each pixel of the image, and the respective second value for each pixel is a third measurement of the probability of said pixel belonging to the anomaly in the image — 240b

FIG. 3

Input the image into a feature extractor in a model for detecting the anomaly to obtain the first feature map — 210a

Input the first feature map into a codec module in the model to obtain the reconstructed feature map, where a spatial size of the reconstructed feature map is identical to a spatial size of the first feature map — 220a

Input the difference between the first feature map and the reconstructed feature map into the discriminator in the image to obtain the first result — 230a

Determine an anomaly-recognition result of the image according to the first feature map, the reconstructed feature map, and the first result — 240

FIG. 4

Obtain a first mask and the first sample image containing the anomaly, where the first mask indicates that no pixel in the first sample image belongs to the anomaly, the first sample image is obtained through applying a second mask to the second sample image not containing the anomaly, and the second mask indicates locations of pixels to be converted into the anomaly ⌐ 510

Input the second sample image into the feature extractor to obtain a first sample feature map, input the first sample feature map into the codec module to obtain a first reconstructed sample feature map, input a difference between the first reconstructed sample feature map and the first sample feature map into the discriminator to obtain a first sample result, input the first sample image into the feature extractor to obtain a second sample feature map, input the second sample feature map into the codec the codec module to obtain a second reconstructed sample feature map, and input a difference between the second reconstructed sample feature map and the second sample feature map into the discriminator to obtain a second sample result ⌐ 520

Calculate a loss according to the first sample feature map, the first reconstructed sample feature map, the first sample result, the second sample feature map, the second reconstructed sample feature map, and the second sample result ⌐ 530

Updating a parameter of the model using the loss ⌐ 540

## FIG. 5

Feature-map extraction part 610  Unsupervised reconstruction part 620  Discriminative reconstruction part630

Feature extractor → Encode → Decode → Pixel-level discriminator →

## FIG. 6

| Unsupervised reconstruction | Unsupervised discriminative reconstruction |

Pixel AUROC
Image AUROC
Pixel AUPR
Training loss

Pixel AUROC
Image AUROC
Pixel AUPR
Training loss

FIG. 7

FIG. 8

| Extracting module | 901 |
| Encoding-decoding module | 902 |
| Reconstructing module | 903 |
| Recognizing module | 904 |

**FIG. 9**

| Sample processing module | 1001 |
| Model processing module | 1002 |
| Loss calculating module | 1003 |
| Parameter updating module | 1004 |

**FIG. 10**

1100

1112

Network

1101

Central
processing unit

1111

Network
interface unit

System bus 1105

1104    1102

Random access
memory

Read-only
memory

System memory  1103

1106

1113

Operating system

1114

Application

Mass storage
device

1115

Another program
module

FIG. 11

# EP 4 769 299 A1

## INTERNATIONAL SEARCH REPORT

| International application No. |
|---|
| **PCT/CN2024/119274** |

### A. CLASSIFICATION OF SUBJECT MATTER

G06T 7/00(2017.01)i

According to International Patent Classification (IPC) or to both national classification and IPC

### B. FIELDS SEARCHED

Minimum documentation searched (classification system followed by classification symbols)

IPC: G06T G06V G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 异常, 缺陷, 特征提取, 提取特征, 编码器, 解码器, 编解码器, 生成器, 鉴别器, 判别器, 重建, 误差, 差分, 差值, 合成, 训练, 概率, anomaly, abnormal, defect, feature extraction, encoder, decoder, generator, discriminator, reconstruct, error, difference, composite, train, probability

### C. DOCUMENTS CONSIDERED TO BE RELEVANT

| Category* | Citation of document, with indication, where appropriate, of the relevant passages | Relevant to claim No. |
|---|---|---|
| PX | CN 117710301 A (TENCENT TECHNOLOGY (SHENZHEN) CO., LTD.) 15 March 2024 (2024-03-15) <br> claims 1-15 | 1-15 |
| A | US 2023326195 A1 (SIEMENS AKTIENGESELLSCHAFT) 12 October 2023 (2023-10-12) <br> description, paragraphs 0009-0025, and figure 2 | 1-15 |
| A | US 2021374928 A1 (FUJITSU LIMITED) 02 December 2021 (2021-12-02) <br> description, paragraphs 0098-0102, and figure 8A | 1-15 |
| A | CN 114119460 A (SHANGHAI LIANLU SEMICONDUCTOR TECHNOLOGY CO., LTD.) 01 March 2022 (2022-03-01) <br> entire document | 1-15 |
| A | CN 116977703 A (TENCENT TECHNOLOGY (SHENZHEN) CO., LTD.) 31 October 2023 (2023-10-31) <br> entire document | 1-15 |

☑ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **19 November 2024** | **25 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/119274** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 116433634 A (TSINGHUA SHENZHEN INTERNATIONAL GRADUATE SCHOOL) 14 July 2023 (2023-07-14) entire document | 1-15 |
| A | CN 112101426 A (SOUTHEAST UNIVERSITY) 18 December 2020 (2020-12-18) entire document | 1-15 |

Form PCT/ISA/210 (second sheet) (July 2022)

**INTERNATIONAL SEARCH REPORT**
Information on patent family members

International application No.

**PCT/CN2024/119274**

| Patent document cited in search report | | | Publication date (day/month/year) | Patent family member(s) | | | Publication date (day/month/year) |
|---|---|---|---|---|---|---|---|
| CN | 117710301 | A | 15 March 2024 | None | | | |
| US | 2023326195 | A1 | 12 October 2023 | EP | 4186000 | A1 | 31 May 2023 |
| | | | | WO | 2022046077 | A1 | 03 March 2022 |
| | | | | CN | 116034375 | A | 28 April 2023 |
| US | 2021374928 | A1 | 02 December 2021 | EP | 3916635 | A1 | 01 December 2021 |
| | | | | EP | 3916635 | B1 | 10 May 2023 |
| | | | | JP | 2021190105 | A | 13 December 2021 |
| | | | | US | 11727670 | B2 | 15 August 2023 |
| | | | | CN | 114092386 | A | 25 February 2022 |
| CN | 114119460 | A | 01 March 2022 | None | | | |
| CN | 116977703 | A | 31 October 2023 | None | | | |
| CN | 116433634 | A | 14 July 2023 | None | | | |
| CN | 112101426 | A | 18 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023116921640